# EUROPEAN PATENT SPECIFICATION

(11) **EP 2 003 798 B1**
(45) Date of publication and mention of the grant of the patent: **27.01.2010**
(21) Application number: 07290734.8
(22) Date of filing: 12.06.2007
(51) Int. Cl.: H04B 10/17, H04J 14/02

(54) **Method for feeding an optical sum signal to an optical amplifier, tree-shaped optical network and central station**
Verfahren zum Zuführen eines optischen Summsignals zu einem optischen Verstärker, baumförmiges optisches Netz und Hauptstation
Procédé d'envoi d'un signal somme optique à un amplificateur optique, réseau optique arborescent et station centrale

(43) Date of publication of application: 17.12.2008
(73) Proprietor: Alcatel Lucent, 75008 Paris (FR)
(72) Inventor: Krimmel, Heinz-Georg, 70825 Korntal-Münchingen (DE)
(74) Representative: Schmidt, Werner Karl

(56) References cited:
- EP-A- 1 768 282
- WO-A-03/003636
- JP-A- 2005 184 111
- US-A1- 2004 247 246
- CHAE C-J ET AL: "EDFA Transient Control Based on Envelope Detection for Optical Burst Switched Networks" IEEE PHOTONICS TECHNOLOGY LETTERS, IEEE SERVICE CENTER, PISCATAWAY, NJ, US, vol. 17, no. 1, January 2005 (2005-01), pages 226-228, XP011124106 ISSN: 1041-1135

## Description

### Background of the invention

The invention relates to a method for feeding an optical sum signal resulting from the addition of an optical auxiliary signal to an optical payload signal, in particular a burst-mode payload signal, to an optical amplifier, wherein the power of the auxiliary signal is controlled such that an essentially constant power of the envelope of the sum signal is generated, wherein a nominal value of the constant power of the envelope of the sum signal is controlled in dependence of a maximum possible power of the payload signal, and wherein the optical amplifier is part of a tree-shaped optical network. The invention also relates to a tree-shaped optical network comprising at least one optical amplifier device for amplification of a payload signal, in particular of a burst-mode payload signal, the amplifier device comprising: an optical amplifier, signal addition means for adding an auxiliary signal to the payload signal resulting in an optical sum signal which is fed to the optical amplifier, and control means for controlling the power of the auxiliary signal such that an essentially constant power of the envelope of the sum signal is generated, and set point generation means for setting a nominal value of the constant power of the envelope of the sum signal in dependence of a maximum possible power of the payload signal. The invention further relates to a central station for such a tree-shaped optical network.

A method and a tree-shaped optical network as described above are known from EP 1 768 282 A1.

Optical fiber amplifiers, and more particularly erbium-doped fiber amplifiers (EDFAs), are used since long on optical transmission lines, as the gain recovery time in an erbium-doped fiber amplifier is greater than 0.1 ms. Such a long recovery time serves to stabilize the gain of the amplifier, since the gain does not have the time to rise when the signal passes from a high state to a low state at the modulation frequencies used in telecommunications which are of the order of 1 MHz to 10 GHz. Therefore, an EDFA does not present gain nonlinearity as a function of the power of the input signal at the modulation frequencies of the signals used in telecommunications systems.

In passive optical networks (PONs) having a tree-shaped point-to-multipoint structure, a number of optical network units (ONUs), also referred to as optical network terminals (ONTs), located near end users, send upstream signals to an optical line termination (OLT) at the head end of the passive optical network. These upstream signals are combined using a multiple access protocol, e.g. of the time division multiplex access (TDMA) type: The OLT ranges the ONUs in the time domain in order to provide delay-equalized time slot assignments for upstream communication. As not all of the time slots are necessarily assigned to ONUs and received power varies from ONU to ONU, the resulting upstream signal is a burst-mode signal with time periods with high optical power (bursts) and idle periods in which none of the ONUs generates an upstream signal.

It has been observed that bursty signals which are present at the input to an optical fiber amplifier with a slow gain recovery time, such as an EDFA, have the effect of modulating the optical gain of the optical fiber amplifier since it tends to saturate at the output. Thus, the gain of the amplifier varies in transient manner having a gain higher than the sustainable gain after idle periods and gain slumping occurs after a succession of longer bursts. This may lead to transmission errors in the final electronic receiver which relies on a mainly constant envelope power when setting the decision threshold.

A solution to this problem proposing a hybrid optical/electronic stabilization with a feed-forward compensation scheme using an AC-coupled detection circuit is described in: "EDFA Transient Control Based on Envelope Detection for Optical Burst Switched Networks", An V. Tran et al., IEEE Photonics Technology Letters, Vol. 17, No. 1, January 2005.

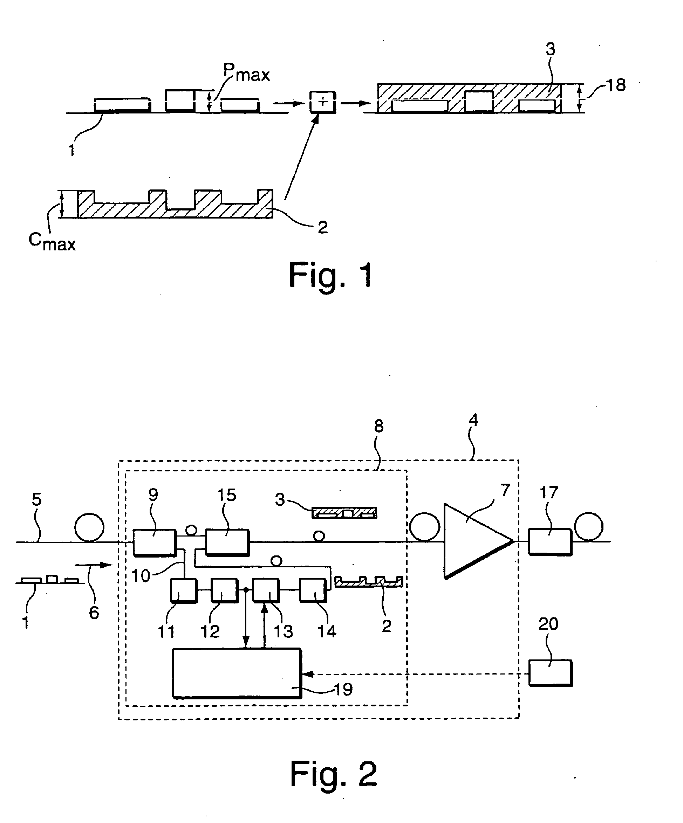

In Fig. 1, the solution of the prior art is illustrated with a burst-mode optical payload signal 1 having three bursts, each of which varies at a bit level (i.e. typically at a time-scale of 100 picoseconds to 100 nanoseconds), but has a constant overall envelope at a time-scale of the respective burst. An auxiliary signal 2 is generated having an amplitude which is chosen to be complementary to the burst-mode optical signal 1 at the time-scale of the envelope of the bursts ranging typically from 1 to 100 microseconds. The auxiliary signal 2 is added to the payload signal 1 such that a sum signal 3 is generated having constant amplitude - hence constant power - on the time-scale of the gain recovery time constant. The resulting sum signal 3 can be fed to an optical amplifier and, as a signal with constant power, will be amplified with constant gain.

In the case described above, the amplitude of the auxiliary signal 2 is chosen to be complementary to the envelope of the bursts, i.e. the resulting sum signal is constant only on average. This is not a problem when an amplifier with a long recovery time such as an EDFA is used, resulting in the stabilization of the gain at least at the modulation frequencies used in telecommunications. For amplifiers with shorter gain recovery time, the amplitude of the auxiliary signal 4 may be chosen to be complementary to the bursts at a bit-level, resulting in a sum signal which is constant also at the much shorter bit-level time-scale.

For improving the compensation technique of the state of the art using feed-forward compensation, it is known to use of a feedback technique in which a compensation laser source for generating the auxiliary signal is driven with a voltage signal generated using a monitoring signal at the output of the amplifier. In the proposed solution, the laser source is driven by the analog voltage signal steering between zero and the maximum driver voltage of the optical source, such that a constant sum signal is generated having a fixed power corresponding to the set maximum output power of the laser source. However, such a fixed setting of the maximum compensation power does not take into account, especially in Wavelength Division Multiplex (WDM)-PONs in which a payload signal with several wavelengths has to be amplified in the optical amplifier, the spread of input power levels given by various PON splitting ratios, different PON splitter insertion losses and variations in output power of ONUs. Especially the number of wavelengths crossing the EDFA is not fixed over time in WDM-PONs.

From US 2004/0247246 A1, an optical power equalization method and an optical power equalizer for optical signals travelling upstream in a PON are disclosed. The equalizer includes a wavelength coupler, an optical splitter, an optical detector, an active gain control circuit, a delay element, and an optical amplifier. The wavelength coupler separates an upstream optical signal from a single optical fiber. The optical splitter transfers a part of the optical signal to the optical detector. The optical detector converts the signal from the coupler into an electrical signal having an amplitude proportional to the optical signal's intensity. The control circuit controls a driving current to be provided to the amplifier, according to the electrical signal's amplitude. The delay element delays the optical signal by a time required for the optical detector and the control circuit to perform their operation. The amplifier amplifies the optical signal with a gain according to the driving current form the control circuit.

### Object of the invention

It is the object of the invention to provide a method and a tree-shaped optical network as described above as well as a central station which are capable of amplifying a payload signal with optimized gain, in particular in WDM-PONs.

### Short description of the invention

This object is achieved by a method wherein at least two passive optical networks of the tree-shaped optical network transmit upstream signals contributing to the optical power of the payload signal, in particular at different wavelengths, and wherein the maximum possible power of the payload signal is determined by generating an upstream signal with maximum power in each of the passive optical networks, the upstream signals of the passive optical networks being synchronized to arrive concurrently at the optical amplifier.

In the state of the art, the fixed setting of compensation power is set manually to be prepared for the worst case by choosing a compensation light source of a type having a maximum power which corresponds to the maximum possible power at the input to the amplifier, the latter being determined during installation of the optical amplifier in the network. However, such a setting misses to optimise the achievable gain when the power level of the payload signal is at the lower edge, e.g. due to high insertion loss in the distribution part of the network. Thus, instead of using the fixed maximum compensation power of the compensation source, the invention proposes to control the maximum compensation power of the compensation source to achieve maximum amplification gain by determining the maximum possible input power to the amplifier by measurement.

Alternatively, the maximum possible input power may be determined by using data available about the input conditions of the amplifier when the latter is part of an optical network. The input conditions of the optical amplifier comprise inter alia the number of wavelengths of the payload signal, damping of the payload signal depending on splitting conditions or fiber lengths in the network etc. These input conditions are available in a network management unit (OAM) which may calculate the expected maximum power of the payload signal based on these conditions and may set the maximum compensation power accordingly.

The available gain on a compensated EDFA is determined by the saturated output power and the compensation power provided at the input. The compensation input power has to be chosen such that the maximum power of the payload signal can be compensated for, with the target to keep the total input power constant to the end of a constant gain. Alternatively, as some receivers may be able to tolerate signals having non-constant envelope power without causing transmission errors by adjusting their decision thresholds, it may be sufficient to generate a sum signal which is essentially constant, i.e. the maximum power of the compensation source is set such that some bursts showing extremely high power peaks cannot be fully compensated. In this case, the property of the payload signal which may be used to set the maximum power of the compensation source is still the peak power of the payload signal which is compensated to a certain fraction only.

In any case, the maximum compensation power should be kept as low as possible in order to achieve maximum gain. Thus, the maximum expected peak power or average peak power of the payload signal has to be anticipated and to be set explicitly in a control loop. This leads to a feedback-like interrelation of gain and input power which reduces the impact of a high PON loss, especially if a transparent WDM transport is following and equal power levels per wavelengths are desirable.

In the present, invention, the optical amplifier is located at a main line of an optical network which is usually a WDM-PON comprising several PONs transmitting upstream signals at different wavelengths to a central station, the upstream signals of all wavelengths being amplified in the optical amplifier. In this case, the maximum possible optical power of the payload signal can be determined by introducing a 'bright period' during which all PONs of the optical network (operating on several wavelengths) send out a signal from the respective most powerful ONU (determined e.g. by each PON's respective OLT), resulting in a payload signal having maximum possible power at the optical amplifier. Due to the multiple access protocol used in upstream transmission, each time slot is attributed to only one ONU. Consequently, by selecting the ONU transmitting with maximum power in each of the PONs, an upstream signal with the maximum possible power is generated.

The envisaged adaptation can be done in an automatic control loop by observing, over a certain time span, e.g. several seconds, the arriving burst power levels (peak-hold), thus determining the maximum possible power and accordingly setting the compensation power (then fixed). The set point of maximum compensation power may also be controlled remotely in an operations, administration, and maintenance (OAM) unit.

For an optimal setting of the maximum compensation power, the input spectrum of the payload signal may be inspected using an input monitor (for WDM operated EDFAs). Alternatively or in addition, the set point may be chosen in dependence of the quality of the amplified sum signal, e.g. by differentiating the amplified sum signal using a high-pass filter and checking if the amplified sum signal is sufficiently smooth.

In a preferred variant, the nominal value is controlled such that it exceeds the maximum possible power of the payload signal by a given minimum value. In this case, an over-compensation is generated by creating a safety margin which is defined by the minimum value. The minimum value may be a fixed amount of optical power or may depend on the maximum possible power, preferably being a fraction, e.g. 5 %, thereof.

The invention also relates to a tree-shaped optical network as described in the background of the invention section, the tree-shaped optical network comprising at least two passive optical networks to which the amplifier device is connected, the passive optical networks transmitting upstream signals contributing to the optical power of the payload signal, in particular at different wavelengths, wherein for determining the maximum possible power of the payload signal synchronization means are provided in the tree-shaped optical network for synchronizing upstream signals with maximum power generated in each passive optical network to arrive concurrently at the optical amplifier device. By using a synchronization means for the upstream signals, the maximum possible power at the input to the optical amplifier can be determined. If the OLTs of different PONs are adapted to communicate with each other or with a controlling device, they may serve as synchronization means.

In a preferred embodiment, the set point generating means are adapted to set the nominal value such that it exceeds the maximum possible power of the payload signal by a given minimum value, so as to generate a safety margin, as discussed above.

The set point generating means may also observe the input payload signal, e.g. using an input monitor, and measure the arriving burst power levels (peak-hold) over a given time period for adapting the maximum compensation power to the maximum measured peak power. Alternatively, the set point generating means may use an output monitor which observes the amplified payload signal after extraction of the auxiliary signal, which has the advantage that a smaller fraction of the power of the amplified signal (e.g. 0.1 % to 1 %) needs to be tapped, as the power of the amplified signal is increased. In both cases, the set point generating means perform local control of the nominal value of the sum signal, thus serving also as a set point control means.

In a further preferred embodiment, the tree-shape optical network further comprises set point controlling means for remote controlling of the set point generation means, the set point controlling means being located remote from the optical amplifier device within the tree-shaped optical network. In this case, remote control of the set point may be performed in the optical network, preferably upstream of the amplifier device. This can be done by inspecting the amplified payload signal, preferably after removal of the auxiliary signal at a remote location upstream of the optical amplifier and providing the information about the correct set point to the set point generation means.

The invention is further realized in a central station for a tree-shaped optical network according to the embodiment described above, the central station comprising grant allocating means for allocating upstream grants to terminals located in the passive optical networks of the tree-shaped optical network, the grant allocation means being adapted to allocate the grants such that in each of the passive optical networks an upstream signal of maximum power is generated, the grant allocation means being further adapted to take the different delay times from the terminals into account such that the upstream signals arrive concurrently at the optical amplifier device of the tree-shaped optical network. The grant allocating means of the central station comprise a plurality of upstream schedulers (optical line terminations, OLTs), each for one of the passive optical networks. For synchronizing the upstream signals, synchronization of the OLTs is required, which may be done by synchronizing all of the OLTs to an external clock-cycle, or by using one of the OLTs as a master, the remaining OLTs being synchronized to the master in a master/slave arrangement. Alternatively, the upstream signal with maximum possible power may be generated without synchronization of the OLTs. In this case, unsynchronized upstream grants for each of the passive optical networks are generated, allowing each PON to send an upstream signal with maximum power for a time, e.g. several upstream frames, which is long enough to ensure that an upstream signal of maximum possible power is available at the amplifier device.

In a further highly preferred embodiment, the grant allocation means are adapted to allocate for each passive optical network only one grant at a time, the grant allocation means being further adapted to allocate the one grant to the terminal which generates an upstream signal of maximum power within the passive optical network. The upstream grant may be sent from the central station directly to the terminal with maximum optical power in each PON, in case that those terminals are known to the central station. Alternatively, an upstream grant request may be sent to the respective OLTs at the head of each PON which have full knowledge of the power of the different terminals in the PON and will send an upstream grant to the terminal having maximum optical power in upstream transmission.

Further characteristics and advantages of the invention are provided in the following description of exemplary embodiments of the invention, with reference to the figures of the drawing, which shows details that are significant in the context of the invention, and in the claims. The individual characteristics can be implemented individually by themselves, or several of them can be implemented in any desired combination in a variant of the invention.

### Drawing

The invention is shown in the drawing.
- **Fig. 1**: shows power compensation of a burst-mode payload signal,

- **Fig. 2**: shows an example of an optical amplifier device with feed-forward compensation,
- **Fig. 3**: shows an example of an optical amplifier device with feed-back compensation, and
- **Fig. 4**: shows an embodiment of an optical access network according to the invention, comprising the optical amplification device of Fig. 2.

Fig. 2 shows an optical amplifier device **4** as an in-line element of an optical fiber line **5** in an optical network (not shown). The optical fiber line 5 is used for transmitting a burst-mode optical payload signal 1 in an upstream direction (represented by an arrow **6).** Before feeding the payload signal 1 to an EDFA 7 of the optical amplifier device 4, the payload signal 1 traverses a signal padding unit **8** for complementing of the payload signal 1 to a constant envelope power. The padding unit 8 comprises a tap coupler **9** for extracting part of the power of the payload signal 1, typically 10 %, from the optical fiber line 5 to an auxiliary signal generation path **10.** The extracted part of the payload signal 1 is converted to an electrical signal in a photo-diode **11** and subsequently fed to an envelope detector **12** which performs an electrical envelope detection of the power of the burst-mode optical signal 1 at a time-scale of the EDFA gain recovery time constants. The output of the envelope detector 12 is subsequently fed to a controller **13** for controlling a laser diode which serves as an optical source **14** for generation of an optical auxiliary signal 2. The optical auxiliary signal 2 is then provided as an input to a multiplexer serving as a signal addition means **15** for generating an optical sum signal 3 having constant power at the time-scale of the EDFA gain recovery time constants. For this purpose, the optical source 14 is driven by the controller 13 in such a way that the auxiliary signal 3 is complementary to the payload signal 2.

In this way, the payload signal 1 of the optical fiber line 5 and the auxiliary signal 2 are synchronized when both are superimposed in the signal addition means 15. The wavelength of the optical source 14 is chosen to be located within the amplification spectrum of the optical amplifier 7, but is sufficiently apart from the wavelengths of the payload signal 1 such that the auxiliary signal 2 can be extracted from the amplified sum signal 3 by optical filtering in the wavelength domain, e.g. by means of a notch filter **17** located in the optical fiber line at the output of the optical amplifier 7. It is understood that the optical amplification device 4 may also serve as an optical repeater.

For setting a nominal value **18** (see Fig. 1) of the constant power of the envelope of the sum signal 3, the optical amplifier device 4 comprises a set point generating means **19** which is coupled to the controller 13 for steering the voltage level of the driving signal for the optical source 14. The nominal value 18 is determined depending on the maximum possible power **Pₘₐₓ** (see Fig. 1) of the payload signal 1. For detecting the maximum possible power Pₘₐₓ, the set point generating means 19 is operatively coupled to the output of the envelope detector 12 for inspecting the envelope of the payload signal 1. The set point generating means 19 uses an automatic control loop for setting the nominal value 18 by observing, over a certain time period, e.g. several seconds, the arriving burst power levels (peak-hold) of the payload signal 1, thus determining the maximum possible power Pₘₐₓ and accordingly setting the maximum compensation power **Cₘₐₓ** (see Fig. 1) which is then fixed. The duration of the time period of the control loop is chosen such that each entity which performs upstream transmission on the fiber line 5 sends an upstream signal at least once during that period, such that the maximum possible power can be determined when only one ONU is allowed to send an upstream signal at a time.

For assuring that the compensation is still possible when the maximum possible power of the input signal increases, e.g. when additional ONUs transmitting at a higher power are introduced during a network upgrade, the maximum compensation power Cₘₐₓ is set such that it exceeds the maximum possible power Pₘₐₓ by a given minimum value, e.g. 5%, serving as a security margin. In this way, a good balance between achievable gain and output quality of the amplified payload signal can be achieved. Alternatively, the maximum compensation power Cₘₐₓ of the auxiliary signal 2 may be chosen to be lower than the maximum possible power Pₘₐₓ of the payload signal 1. This will lead to a deterioration of the quality of the amplified payload signal, as bursts having a exceeding high peak power cannot be fully compensated, which may be tolerable in certain cases.

In Fig. 2, an alternative way of controlling the set point of the optical source 14 is shown. In this case, the set point generating means 19 does not observe the payload signal 1 for determining the maximum possible power Pₘₐₓ of the payload signal 1, as this information is supplied by a remote set point control means **20**, e.g. an OAM unit, being operatively coupled to the set point generating means 19. In this case, the amplified output signal may be observed at a location remote from the optical amplifier device 4 for determining the maximum possible power Pₘₐₓ. The set point may be chosen in dependence of the quality of the amplified sum signal, e.g. by differentiating the amplified sum signal using a high-pass filter and checking if the amplified sum signal is sufficiently smooth, or by inspecting the peak power of the payload signal.

Alternatively, instead of measuring the maximum possible power Pₘₐₓ of the payload signal, this quantity can be determined by using data about the input conditions of the amplifier 4 when the latter is part of an optical network (not shown). The input conditions of the optical amplifier 4 comprise inter alia the number of wavelengths of the payload signal, damping of the payload signal in dependence of splitting conditions or fiber lengths in the network etc. These input conditions may be available in the OAM unit 20 which calculates the expected maximum possible power Pₘₐₓ of the payload signal based on these conditions and sets the maximum compensation power accordingly. However, in general, the measurement of the maximum possible power Pₘₐₓ will lead to more accurate results.

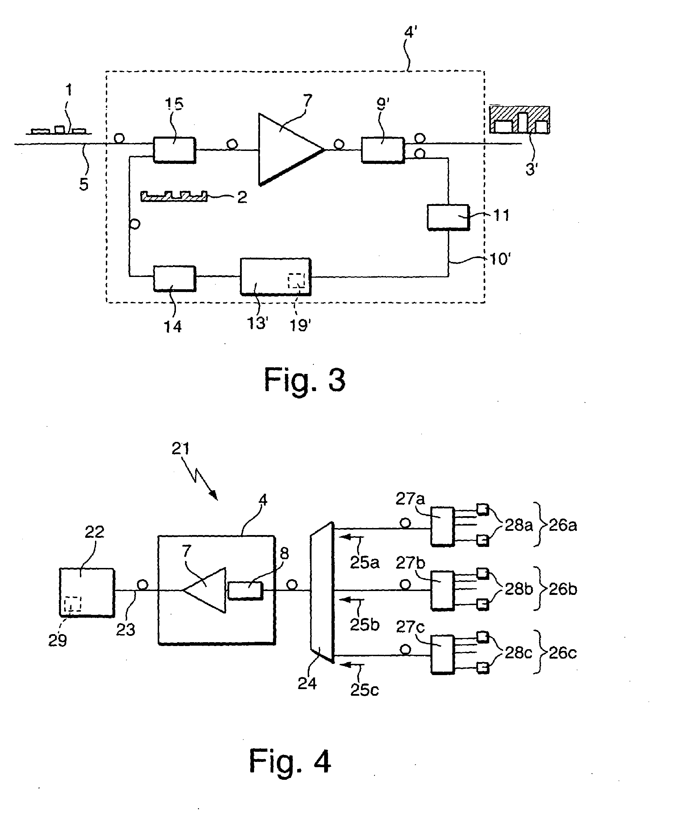

An alternative realization of an optical amplification device **4'** using a feedback loop is shown in **Fig. 3****.** In this case, the auxiliary signal generation path **10'** is formed between the combiner 15 and a tap coupler **9'** for tapping part of the amplified sum signal **3'** at the output of the optical amplifier 7. As signal levels are higher by the gain factor at the output of the optical amplifier 7, only a small part of the signal of about 0.1 % to 1% needs to be tapped and the signal is still strong enough to be easily detected. The branched optical signal is converted to an electrical signal in the photodiode 11 and has a temporal reaction characteristic that results in a signal current having the average power of the amplified optical signal even when high bit-rates are used. Alternatively, an envelope detector may be used, us described with reference to Fig. 2. The setting of the maximum compensation power Cₘₐₓ is performed in a controller **13'** which comprises a set point generating means **19'.** The controlling of the set point is performed in the way described with reference to Fig. 2 by observing the amplified signal.

**Fig. 4** shows the optical amplifier device 4 of Fig. 2 implemented in an optical network **21** using wavelength division multiplexing. The optical amplifier device 4 is located in between a central station **22** and a wavelength division multiplexer 24 in a feeder line **23** of the optical network 21. The wavelength division multiplexer 24 combines upstream signals **25a** to **25c** transmitted from three passive optical networks **26a** to **26c,** each at a different wavelength. The passive optical networks 26a to 26c each comprise a passive optical splitter **27a** to **27c** at the head end and a plurality of subscriber terminals **28a** to **28c** close to end users of the optical access network 21. The scheme can be applied to passive optical networks without passive splitters, too.

For determining the maximum optical power of a payload signal generated by combining the upstream signals 25a to 25c from the PONs 26a to 26c, it may be insufficient to inspect the payload signal for a short time period, as more than one subscriber terminal 28a to 28c contributes to the payload signal at a time. Consequently, the maximum possible power will only appear at the input of the optical amplifier device 4 when the subscriber terminals 28a to 28c having maximum upstream power in each of the PONs 26a to 26c transmit their upstream signals 25a to 25c at the same time.

Such a situation can be evoked when a grant allocation means **29** in the central station 22 for allocating upstream grants to the subscriber terminals 28a to 28c in the PONs 26a to 26c allocates the grants in such a way that in each of the PONs 26a to 26c an upstream signal 25a to 25c of maximum power is generated. The grant allocation means 29 comprises a plurality of upstream schedulers (OLTs, not shown), one for each of the PONs 26a to 26c. The OLTs are synchronized either by using a master/slave arrangement or by a synchronization means (not shown) which defines a clock-cycle for all of the PONs. In this way, the grant allocation means 29 ensures that the upstream signals 25a to 25c arrive concurrently at the optical amplifier device 4 by taking the different delay times from the terminals 28a to 28c to the optical amplifier device 4 account.

The grant allocation means 29 allocate only one grant for each passive optical network 26a to 26c, the one grant being allocated to one of the terminals 28a to 28c which generates an upstream signal of maximum power within the respective passive optical network 26a to 26c. In such a way, a payload signal with maximum optical power is generated at the optical amplifier device 4 which can be taken into account for setting of the nominal value of the power of the sum signal, as described above.

As an alternative to the determination of the maximum possible power of a WDM payload signal as described above, it is also possible to inspect the input spectrum of the payload signal using an input monitor. In this way, the maximum optical power of the payload signal can be determined for each wavelength separately, and the above process may be avoided.

In summary, by controlling the maximum compensation power of the auxiliary signal, maximum usage of achievable optical gain at a given saturation power of an optical amplifier can be attained, such that PON loss variation impacts may be equalized. The proposed solution may automatically adapt to network upgrades, e.g. use of new wavelengths or changes in the splitting factor, is independent of protocol types and multiple access control information and uses information which is normally anyhow available in the burst gain stabilization block of the optical amplifier. Moreover, for the proposed solution, no additional optical elements are needed, and remote use of burst-gain-stabilized optical amplifiers (passive) is not prevented, where compensation source and amplifying fiber section are not located at the same place.

It is understood that the solution described above is not limited to EDFAs, but may equally well be applied to other optical amplifiers with similar gain recovery times. The solution described above may also be applied to optical amplifiers having faster gain recovery times, provided that compensation of the optical signal is performed at a time-scale below the time-scale of the bursts, in particular at a time-scale of the bit rate.

## Claims

1. Method for feeding an optical sum signal (3) resulting from the addition of an optical auxiliary signal (2) to an optical payload signal (1), in particular a burst-mode payload signal, to an optical amplifier (7),
wherein the power of the auxiliary signal (2) is controlled such that an essentially constant power of the envelope of the sum signal (3) is generated,
wherein a nominal value (18) of the constant power of the envelope of the sum signal (3) is controlled in dependence of a maximum possible power (Pₘₐₓ) of the payload signal (1), wherein the optical amplifier (7) is part of a tree-shaped optical network (21),
**characterized in that**
at least two passive optical networks (26a to 26c) of the tree-shaped optical network (21) transmit upstream signals (25a to 25c) contributing to the optical power of the payload signal (1), in particular at different wavelengths, and **in that** the maximum possible power (Pₘₐₓ) of the payload signal (1) is determined by generating an upstream signal with maximum power in each of the passive optical networks (26a to 26c), the upstream signals (25a to 25c) of the passive optical networks (26a to 26c) being synchronized to arrive concurrently at the optical amplifier (7).

2. Method according to claim 1, wherein the nominal value (18) is controlled such that it exceeds the maximum possible power (Pₘₐₓ) of the payload signal (1) by a given minimum value.

3. Tree-shaped optical network (21) comprising at least one optical amplifier device (4, 4') for amplification of a payload signal (1), in particular of a burst-mode payload signal, the amplifier device (4, 4') comprising:
an optical amplifier (7),
signal addition means (15) for adding an auxiliary signal (2) to the payload signal (1) resulting in an optical sum signal (3) which is fed to the optical amplifier (7),
control means (13, 13') for controlling the power of the auxiliary signal (2) such that an essentially constant power of the envelope of the sum signal (3) is generated,
set point generation means (19, 19') for setting a nominal value (18) of the constant power of the envelope of the sum signal (3) in dependence of a maximum possible power (Pₘₐₓ) of the payload signal (1),
**characterized in that**
the tree-shaped optical network (21) comprises at least two passive optical networks (26a to 26c) to which the amplifier device (4, 4') is connected, the passive optical networks (26a to 26c) transmitting upstream signals (25a to 25c) contributing to the optical power of the payload signal (1), in particular at different wavelengths, wherein for determining the maximum possible power (Pₘₐₓ) of the payload signal (1) synchronization means (29) are provided in the tree-shaped optical network (21) for synchronizing upstream signals (25a to 25c) with maximum power generated in each passive optical network (26a to 26c) to arrive concurrently at the optical amplifier device (4).

4. Tree-shaped optical network according to claim 3, wherein the set point generation means (19, 19') is adapted to set the nominal value (18) such that it exceeds the maximum possible power (Pₘₐₓ) of the payload signal (1) by a given minimum value.

5. Tree-shaped optical network according to claim 3, further comprising set point controlling means (20) for remote control of the set point generation means (19), the set point controlling means (20) being located remote from the optical amplifier device (4) within the tree-shaped optical network (21).

6. Central station (22) for a tree-shaped optical network (21) according to claim 3, the central station (22) comprising grant allocating means (29) for allocating upstream grants to terminals (28a to 28c) located in the passive optical networks (26a to 26c) of the tree-shaped optical network (21), the grant allocation means (29) being adapted to allocate the grants such that in each of the passive optical networks (26a to 26c) an upstream signal (25a to 25c) of maximum power is generated, the grant allocation means (29) being further adapted to take the different delay times from the terminals (28a to 28c) into account such that the upstream signals (25a to 25c) arrive concurrently at the optical amplifier device (4, 4') of the tree-shaped optical network (21).

7. Central station according to claim 6, wherein the grant allocation means (29) are adapted to allocate for each passive optical network (26a to 26c) only one grant at a time, the grant allocation means (29) being further adapted to allocate the one grant to the terminal (28a to 28c) which generates an upstream signal (25a to 25c) of maximum power within the passive optical network (26a to 26c).

## Patentansprüche

1. Verfahren zum Einspeisen eines aus der Addierung eines optischen Hilfssignals (2) zu einem optischen Nutzsignal (1), insbesondere einem Burstmodus-Nutzsignal, entstandenen optischen Summensignals (3) in einen optischen Verstärker (7), wobei die Leistung des Hilfssignals (2) derart gesteuert wird, dass eine im Wesentlichen konstante Leistung der Hülle des Summensignals (3) erzeugt wird,
wobei ein Nennwert (18) der konstanten Leistung der Hülle des Summensignals (3) in Abhängigkeit von einer maximal möglichen Leistung (Pₘₐₓ) des Nutzzignals (1) gesteuert wird, wobei der optische Verstärker (7) Bestandteil eines baumförmigen optischen Netzwerks (21) ist,
**dadurch gekennzeichnet, dass**
mindestens zwei passive optische Netzwerke (26a bis 26c) des baumförmigen optischen Netzwerks (21) Aufwärtssignale (25a bis 25c) übertragen, welche zur optischen Leistung des Nutzsignals (1), insbesondere bei unterschiedlichen Wellenlängen, beitragen, und dass die maximal mögliche Leistung (Pₘₐₓ) des Nutzsignals (1) durch das Erzeugen eines Aufwärtssignals mit maximaler Leistung in einem jeden der passiven optischen Netzwerke (26a bis 26c) bestimmt wird, wobei die Aufwärtssignale (25a bis 25c) des passiven optischen Netzwerks (26a bis 26c) synchronisiert sind, um gleichzeitig am optischen Verstärker (7) anzukommen.

2. Verfahren nach Anspruch 1, wobei der Nennwert (18) derart gesteuert wird, dass er die maximal mögliche Leistung (Pₘₐₓ) des Nutzsignals (1) um einen gegebenen Mindestwert überschreitet.

3. Baumförmiges optisches Netzwerk (21) mit mindestens einer optischen Verstärkervorrichtung (4, 4') zur Verstärkung eines Nutzsignals (1), insbesondere eines Burstmodus-Nutzsignals, wobei die Verstärkervorrichtung (4, 4') umfasst:
einen optischen Verstärker (7),
Signaladdiermittel (15) zum Hinzufügen eines Hilfssignals (2) zum Nutzsignal (1), wodurch ein optisches Summensignal (3) entsteht, welches in den optischen Verstärker (7) eingespeist wird,
Steuermittel (13, 13') zum Steuern der Leistung des Hilfssignals (2), so dass eine im Wesentlichen konstante Leistung der Hülle des Summensignals (3) erzeugt wird, Sollwert-Erzeugungsmittel (19, 19') zum Einstellen eines Nennwerts (18) der konstanten Leistung der Hülle des Summensignals (3) in Abhängigkeit von einer maximal möglichen
Leistung (Pₘₐₓ) des Nutzsignals (1),
**dadurch gekennzeichnet, dass**
das baumförmige optische Netzwerk (21) mindestens zwei passive optische Netzwerke (26a bis 26c) umfasst, an welche die Verstärkervorrichtung (4, 4') angeschlossen ist,
wobei die passiven optischen Netzwerke (26a bis 26c) Aufwärtssignale (25a bis 25c) übertragen, welche zur optischen Leistung des Nutzsignals (1), insbesondere bei unterschiedlichen Wellenlängen, beitragen, wobei für die Bestimmung der maximal möglichen Leistung (Pₘₐₓ) des Nutzsignals (1) Synchronisierungsmittel (29) in dem baumförmigen optischen Netzwerk (21) bereitgestellt werden, um die Aufwärtssignale (25a bis 25c) mit der in jedem passiven optischen Netzwerk (26a bis 26c) erzeugten maximalen Leistung zu synchronisieren, so dass sie gleichzeitig an der optischen Verstärkervorrichtung (4) ankommen.

4. Baumförmiges optisches Netzwerk nach Anspruch 3, wobei die Sollwert-Erzeugungsmittel (19, 19') dazu ausgelegt ist, den Nennwert (18) so einzustellen, dass er die maximal mögliche Leistung (Pₘₐₓ) des Nutzsignals (1) um einen gegebenen Mindestwert überschreitet.

5. Baumförmiges optisches Netzwerk nach Anspruch 3, weiterhin umfassend Sollwert-Steuermittel (20) für die Fernsteuerung der Sollwert-Erzeugungsmittel (19),
wobei die Sollwert-Steuermittel (20) von der optischen Verstärkervorrichtung (4) entfernt innerhalb des baumförmigen optischen Netzwerks (21) angeordnet sind.

6. Zentrale (22) für ein baumförmiges optisches Netzwerk (21) nach Anspruch 3, wobei die Zentrale (22) Bewilligungszuteilungsmittel (29) für die Zuteilung von Aufwärtsbewilligungen an die in den passiven optischen Netzwerken (26a bis 26c) des baumförmigen optischen Netzwerk angeordneten Endgeräte (28a to 28c), wobei die Bewilligungszuteilungsmittel (29) dazu ausgelegt sind, die Bewilligungen derart zuzuteilen, dass in einem jeden der passiven optischen Netzwerke (26a bis 26c) ein Aufwärtssignal (25a bis 25c) mit einer maximalen Leistung erzeugt wird, wobei die Bewilligungszuteilungsmittel (29) weiterhin dazu ausgelegt sind, die verschiedenen von den Endgeräten (28a bis 28c) verursachten Zeitverzögerungen zu berücksichtigen, so dass die Aufwärtssignale (25a bis 25c) gleichzeitig an der optischen Verstärkervorrichtung (4, 4') des baumförmigen optischen Netzwerks (21) ankommen.

7. Zentrale nach Anspruch 6, wobei die Bewilligungszuteilungsmittel (29) dazu ausgelegt sind, für jedes passive optische Netzwerk (26a bis 26c) nur eine Bewilligung auf einmal zuzuteilen, wobei die Bewilligungszuteilungsmittel (29) weiterhin dazu ausgelegt sind, die eine Bewilligung demjenigen Endgerät (28a bis 28c) zuzuteilen, welches ein Aufwärtssignal (25a bis 25c) mit maximaler Leistung innerhalb des passiven optischen Netzwerks (26a bis 26c) erzeugt.

## Revendications

1. . Procédé d'envoi d'un signal somme optique (3) résultant de l'ajout d'un signal auxiliaire optique (2) dans un signal de charge utile optique (1), en particulier un signal de charge utile en mode rafale, à un amplificateur optique (7), dans lequel la puissance du signal auxiliaire (2) est commandée de telle sorte qu'une puissance essentiellement constante de l'enveloppe du signal somme (3) soit générée,
dans lequel une valeur nominale (18) de la puissance constante de l'enveloppe du signal somme (3) est commandée en fonction d'une puissance possible maximum (Pₘₐₓ) du signal de charge utile (1), dans lequel l'amplificateur optique (7) fait partie d'un réseau optique arborescent (21),
**caractérisé en ce que**
au moins deux réseaux optiques passifs (26a à 26c) du réseau optique arborescent (21) transmettent des signaux optiques montants (25a à 25c) contribuant à la puissance optique du signal de charge utile (1), en particulier à des longueurs d'onde différentes, et **en ce que** la puissance possible maximum (Pₘₐₓ) du signal de charge utile (1) est déterminée en générant un signal montant d'une puissance maximum dans chacun des réseaux optiques passifs (26a à 26c), les signaux montants (25a à 25c) des réseaux optiques passifs (26a à 26c) étant synchronisés pour arriver simultanément dans l'amplificateur optique (7).

2. . Procédé selon la revendication 1, dans lequel la valeur nominale (18) est commandée de telle sorte qu'elle dépasse la puissance possible maximum (Pₘₐₓ) du signal de charge utile (1) selon une valeur minimum donnée.

3. . Réseau optique arborescent (21) comprenant au moins un dispositif d'amplification optique (4, 4') pour l'amplification d'un signal de charge utile (1), en particulier un signal de charge utile en mode rafale, le dispositif d'amplification (4, 4') comprenant :
un amplificateur optique (7),
des moyens d'ajout de signal (15) pour ajouter un signal auxiliaire (2) au signal de charge utile (1) produisant un signal somme optique (3) qui est envoyé à l'amplificateur optique (7),
des moyens de commande (13, 13') pour commander la puissance du signal auxiliaire (2) de telle sorte qu'une puissance essentiellement constante de l'enveloppe du signal somme (3) soit générée,
des moyens de génération de consigne (19, 19') pour définir une valeur nominale (18) de la puissance constante de l'enveloppe du signal somme (3) en fonction d'une puissance possible maximum (Pₘₐₓ) du signal de charge utile (1),
**caractérisé en ce que**
le réseau optique arborescent (21) comprend au moins deux réseaux optiques passifs (26a à 26c) auxquels le dispositif d'amplification (4, 4') est connecté, les réseaux optiques passifs (26a à 26c) transmettant des signaux montants (25a à 25c) contribuant à la puissance optique du signal de charge utile (1), en particulier à des longueurs d'onde différentes, dans lequel, afin de déterminer la puissance possible maximum (Pₘₐₓ) du signal de charge utile (1), des moyens de synchronisation (29) sont prévus dans le réseau optique arborescent (21) pour synchroniser les signaux montants (25a à 25c) d'une puissance maximum générés dans chaque réseau optique passif (26a à 26c) pour arriver simultanément dans le dispositif d'amplification optique (4).

4. . Réseau optique arborescent selon la revendication 3, dans lequel les moyens de génération de consigne (19, 19') sont adaptés pour définir la valeur nominale (18) de telle sorte qu'elle dépasse la puissance possible maximum (Pₘₐₓ) du signal de charge utile (1) selon une valeur minimum donnée.

5. . Réseau optique arborescent selon la revendication 3, comprenant en outre des moyens de commande de consigne (20) pour commander à distance les moyens de génération de consigne (19), les moyens de commande de consigne (20) étant situés à distance du dispositif d'amplification optique (4) à l'intérieur du réseau optique arborescent (21).

6. . Station centrale (22) pour un réseau optique arborescent (21) selon la revendication 3, la station centrale (22) comprenant des moyens d'attribution d'autorisations (29) pour attribuer des autorisations montantes aux terminaux (28a à 28c) situés dans les réseaux optiques passifs (26a à 26c) du réseau optique arborescent (21), les moyens d'attribution d'autorisations (29) étant adaptés pour attribuer les autorisations de telle sorte qu'un signal montant (25a à 25c) d'une puissance maximum soit généré dans chacun des réseaux optiques passifs (26a à 26c), les moyens d'attribution d'autorisations (29) étant en outre adaptés pour prendre en compte les différents retards des terminaux (28a à 28c) de telle sorte que les signaux montants (25a à 25c) arrivent simultanément dans le dispositif d'amplification optique (4, 4') du réseau optique arborescent (21).

7. . Station centrale selon la revendication 6, dans laquelle les moyens d'attribution d'autorisations (29) sont adaptés pour attribuer à chaque réseau optique passif (26a à 26c) une seule autorisation à la fois, les moyens d'attribution d'autorisations (29) étant en outre adaptés pour attribuer l'autorisation unique au terminal (28a à 28c) qui génère un signal montant (25a à 25c) d'une puissance maximum à l'intérieur du réseau optique passif (26a à 26c).
